# EUROPEAN PATENT SPECIFICATION

(11) **EP 0 525 660 B1**
(45) Date of publication and mention of the grant of the patent: **12.10.1994**
(21) Application number: 92112648.8
(22) Date of filing: 24.07.1992
(51) Int. Cl.: C09D 151/00, C09D 127/18, C08F 259/08

(54) **Modified polytetrafluoroethylene coating composition and use thereof**
Anstrichstoffe aus modifiziertem Polytetrafluoräthylen und ihre Anwendungen
Composition de revêtement contenant du polyfluoréthylène modifié et son utilisation

(30) Priority: 24.07.1991 JP 184351/91
(43) Date of publication of application: 03.02.1993
(73) Proprietor: DAIKIN INDUSTRIES, LTD., Kita-ku, Osaka 530 (JP)
(72) Inventor: Hond, Norimasa, c/o Yodogawa Works of, Settsu-shi, Osaka-fu (JP); Mizuno, Toshio, c/o Yodogawa Works of, Settsu-shi, Osaka-fu (JP); Nishinaga, Masaaki, c/o Yodogawa Works of, Settsu-shi, Osaka-fu (JP)
(74) Representative: Hansen, Bernd, Dr. Dipl.-Chem.

(56) References cited:
- EP-A- 0 221 554
- EP-A- 0 254 269
- EP-A- 0 257 644
- EP-A- 0 373 588

## Description

### BACKGROUND OF THE INVENTION

### Field of the invention

The present invention relates to a modified polytetrafluoroethylene coating composition and use thereof. More particularly, it relates to a modified polytetrafluoroethylene coating composition comprising, as a base polymer, modified polytetrafluoroethylene (hereinafter referred to as PTFE) particles each of which consists of a core part and a shell part that contains chlorotrifluoroethylene (hereinafter referred to as CTFE) as a modifier, and an article a surface of which is coated with said composition, such as a cooking utensil and a fixing heater roller.

### Description of related art

Hitherto, a cooking utensil is generally coated with a coating film of a fluororesin, particularly PTFE so as to give a tack-free property and prevent dirt such as a scorched food.

However, the pure PTFE coating film has poor durability since PTFE has a high melt viscosity (10¹¹-10¹² poise) and a poor flow property even if it is melted and must be sintered in the form of particles so that the film has voids and pinholes. Accordingly, a tack-free property and a dirt prevention effect are deteriorated during the use of the cooking utensil and then a scorched food sticks to the cocking utensil.

In order to improve the disadvantage of the pure PTFE coating film, it is proposed to use a coating composition, as a base polymer, a blend of PTFE with a tetrafluoroethylene/perfluoroalkyl vinyl ether copolymer (hereinafter referred to as PFA) (cf. Japanese Patent Kokoku Publication No. 33511/1988 (corresponding to US Patent No. 4,252,859)).

A high PTFE content in the blend is preferable to maintain the properties of PTFE. However, it is difficult to increase the PTFE content to more than 90 % by weight, since the PTFE content is limited so as to exhibit the properties of the blend with PFA. In addition, the handling of the blend is difficult. Further, since PTFE has an extremely different melt viscosity from that of PFA, PFA bleeds on the surface of the utensil and then the strength under heating decreases.

In order to overcome the disadvantage of the conventional PTFE coating film, it is also proposed to use PTFE having a very high molecular weight of from 5,000,000 to 9,000,000 (cf. Japanese Patent Kokai Publication No. 38813/1989 (corresponding to US Patent No. 4,914,146)). The wear resistance and durability of the coating film are improved due to the high molecular weight, but the melt viscosity is so high that the film has still insufficient properties.

EP-A-0 221 554 reveals an aqueous dispersion comprising an aqueous medium and colloidal particles of a fluorine-containing copolymer, wherein each colloidal particle is constituted with a core portion made of a polymer comprising about 99 to 100% by weight of units of tetrafluoroethylene and about 0 to 1% by weight of units of at least one other fluoroolefin and a shell portion made of a polymer comprising about 50 to 97% by weight of units of tetrafluoroethylene and about 3 to 50% by weight of units of chlorotrifluoroethylene, the amount of chlorotrifluoroethylene in the core and shell portions being from about 2.5 to 25% by weight based on the entire amount of the core and shell portions. According to a preferred embodiment, the weight proportion of the core portion and the shell portion in the colloidal particle is from about 95:5 to 30:70.

EP-A-0 257 644 refers to modified PTFE fine powder containing 0.01 to 0.15% by weight of at least one olefinically unsaturated compound selected from the group consisting of a fluoroalkyl vinyl ether of the formula X(CF₂)ₙOCF=CF₂, wherein X is a hydrogen atom, a fluorine atom or a chlorine atom and n is an integer of 1 to 6, and a fluoroalkyl vinyl ether of the formula:

C₃F₇(OCF₂CF₂CF₂)ₘ[OCF(CF₃)CF₂]_{ℓ}OCF=CF₂,

wherein m is an integer of 0 to 2, and ℓ is an integer of 0 to 2, mainly in core parts of the particles, and 0.04 to 0.25% by weight, based on the whole weight of the particles, of chlorotrifluoroethylene in shell parts.

### SUMMARY OF THE INVENTION

An object of the present invention is to provide a PTFE composition which gives a coating film having high hardness and good wear resistance but no void or pinhole.

According to one aspect of the present invention, there is provided a modified PTFE coating composition comprising a dispersion of modified PTFE particles each of which consists of a core part and a shell part in a liquid medium, wherein the shell part contains 0.04 to 0.25 % by weight of chlorotrifluoroethylene based on the weight of the whole particle on the average, and a weight of the shell part is not larger than 50 % based on the weight of the whole particle on the average.

According to another aspect of the present invention, there is provided a cooking utensil a surface of which is coated by a film obtainable from said modified PTFE coating composition.

According to further aspect of the present invention, there is provided a fixing heater roller comprising a roller base member and a covering film obtainable from said modified PTFE coating composition.

### DETAILED DESCRIPTION OF THE INVENTION

The modified PTFE particle used as a base polymer in the coating composition according to the present invention consists of the core part and the shell part. The shell part contains, on the average, 0.04 to 0.25 %, preferably 0.04 to 0.20 %, more preferably 0.06 to 0.20 %, most preferably 0.06 to 0.15 % by weight of CTFE based on the weight of the whole particle.

While the core part may be made of pure PTFE, it is preferably made of PTFE modified with a fluoroalkyl vinyl ether. The modification with the fluoroalkyl vinyl ether decreases the melt viscosity to increase the flow property in the molten state so that the film has no pinhole.

An amount of the fluoroalkyl vinyl ether contained in the core part is 0.01 to 0.15 %, preferably 0.02 to 0.04 % by weight based on the whole particle. In this case, the modification amount of the shell part is preferably higher than that of the core part.

Preferable examples of the fluoroalkyl vinyl ether are an ether of the formula:

X(CF₂)ₙOCF=CF₂

wherein X is a hydrogen, fluorine or chlorine atom, n is a number of 1 to 6, and an ether of the formula:

C₃F₇(OCF₂CF₂CF₂)ₘ[OCF(CF₃)CF₂]ₜOCF=CF₂

wherein m is a number of 0 to 2, and t is a number of 0 to 2.

The weight ratio of the core part to the shell part is from 50:50 to 98:2, preferably from 70:30 to 95:5.

Preferable example of modified PTFE used in the present invention is described in US Patent No. 4,840,998, the disclosure of which is incorporated herein by reference. Other modified PTFE can be prepared by the method disclosed in this US Patent and analogous methods thereto.

In order to prepare the modified PTFE particles having the core part made of pure PTFE, the polymerization of tetrafluoroethylene (hereinafter referred to as TFE) is initiated without the modifier, and after at least 50 % by weight of TFE to be polymerized is consumed, CTFE is introduced into the reaction system.

The liquid medium used to prepare the composition according to the present invention is water or an organic liquid such as toluene, xylene and ethylene glycol.

A content of the modified PTFE in the composition is preferably from about 10 to 60 % by weight.

The composition according to the present invention can be prepared by adding a surfactant to a dispersion of modified PTFE in water or the organic liquid and intimately mixing them. The surfactant may be a nonionic surfactant, an anionic surfactant and the like. An amount of the surfactant is preferably from 5 to 10 parts by weight per 100 parts by weight of modified PTFE in the composition.

The composition according to the present invention may contain a solid film-modifier to improve the properties of the coating film, for example an electrically conductive substance such as silver, aluminum, carbon black or carbon fiber so as to give an antistat effect. An amount of the conductive substance is preferably from 0.1 to 20 %, more preferably from 2 to 20 % by weight based on the composition.

The composition according to the present invention may also contain an additive such as mica particles or flakes. The commercially available additive as such can be used. The mica particles and flakes preferably have an average particle size of from 10 to 100 µm, more preferably from 15 to 50 µm. The incorporation of the mica particles or flake increases corrosion resistance, wear resistance and scratch resistance of the coating film.

In addition, the composition according to the present invention may contain a pigment for coloration (for example, chromium oxide, titanium oxide and carbon black), a wear resistance material (for example, metal powder and magnetic material), and/or an organic polymer for improving adherence to a substrate and smoothness of the coating film (for example, a meltable fluororesin, an acrylic resin, and a heat resistance polymer such as polyamideimide, polyimide, polyarylenesulfide and polyethersulfone).

The composition according to the present invention may be coated on the surface of a substrate, for example, a cooking utensil such a frying pan and an inner pot of a rice cooker, and baked to form a tack-free coating film in the same manner as in the conventional PTFE coating composition. In addition, the composition according to the present invention may be applied on the surfaces of various rollers, for example a fixing heater roller of a copy machine.

The coating film made of the composition according to the present invention has no void or pinhole, and has a high hardness, good wear resistance and good durability. It is thought that because the particles fuse together and shrink by themselves, the coating film has good properties. A tack-free property and a dirt prevention property are maintained for a long time. When the cooking utensil is coated, the cooked food hardly sticks to the utensil.

### PREFERRED EMBODIMENTS OF THE INVENTION

The present invention will be illustrated by the following Examples which do not limit the present invention. In the Examples, the percent and part are by weight unless specified.

### Example 1

In a 6 liter stainless steel (SUS 316) autoclave equipped with an anchor agitating blade and a jacket for controlling temperature, deionized water (2960 ml), solid paraffin wax having a melting point of 56°C (100 g) and ammonium perfluorooctanoate (3 g) were charged. The atmosphere in the autoclave was replaced with a nitrogen gas three times and with a TFE gas twice while heated to 70°C to remove an oxygen gas. Then, the TFE gas was charged to increase the internal pressure to 8.0 x 10⁵ Pa (7.0 kg/cm²G) and stirring at 280 rpm and an internal temperature of 70°C were maintained.

Perfluoropropyl vinyl ether (0.3 g), then a solution of ammonium persulfate (1.25 mg) in water (20 ml) and a solution (20 ml) of disuccinic acid peroxide (360 mg) in water were charged with the TFE gas to maintain the internal pressure at 9.0 x 10⁵ Pa (8.0 kg/cm²G) The reaction proceeded acceleratedly, and the reaction temperature and stirring rate were maintained at constant values of 70°C and 280 rpm, respectively The TFE gas was successively supplied to maintain a constant internal pressure of 9.0 x 10⁵ Pa (8.0 kg/cm²G).

When an amount of TFE consumed in the reaction after the addition of the initiator reached 1300 g, the supply of TFE and the stirring were stopped. Immediately, the gas in the autoclave was purged until the internal pressure decreased to 3.0 x 10⁵ Pa (2 kg/cm²G). Then, a CTFE/TFE mixed monomer gas containing 1.5 % by mole of CTFE was successively introduced in the autoclave from another line in the same manner as for the TFE gas. Namely, the reaction was conducted while maintaining the infernal pressure at 8 kg/cm²G and stirring at 280 rpm.

When an amount of the mixed monomer consumed in the reaction reached 130 g, the supply of the mixed monomer and the stirring were stopped. Immediately, the gas in the autoclave was purged to an atmospheric pressure, the content in the autoclave was removed to terminate the reaction.

During the reaction of mixed monomer (namely the reaction to produce the shell part of the particles), the CTFE content of the mixture gas in the autoclave was determined by a gas chromatography to be from about 0.9 to about 1.1 % by mole. The weight ratio of the core part to the shell part was calculated from the weight ratio of the consumed TFE amount to the consumed mixed monomer amount to be 1300:130, namely 10:1.

A part of the dispersion formed by the polymerization was evaporated to dryness and a polymer content was calculated by regarding a solid content as the polymer content to be 32.2 % by weight. From this content value, a whole polymer yield was calculated to be almost the same as the consumed monomer amount.

The average particle size of the particles was 0.20 µm.

A surfactant and aqueous ammonia were added to the resultant modified PTFE dispersion, and the mixture was stirred at 70 °C for 10 hours and kept standing for about 24 hours. Then, a supernatant liquid was removed. In order to improve the stability, a surfactant and aqueous ammonia were added to prepare a modified PTFE coating composition having a concentration of 60 % by weight.

Tests for determining the properties of a coating film formed from the composition were conducted as follows.

### Coating with the composition

After treating an inner surface of an aluminum frying pan (thickness: 2.4 mm), a primer (a blend of a polyamideimide and a fluororesin) for fluororesin is spray coated on the surface of the frying pan and dried. A polymer composition to be tested is sprayed on the primer layer and dried in an infrared dryer at about 100°C for 10 minutes. Then, the coated frying pan is baked in an electric furnace at 380°C for 10 minutes to form a fluororesin coating film of 30 µm in thickness including the primer layer. The thus coated frying pan is subjected to the following tests.

### Wear resistance test

Before the test, five parallel straight lines with each distance of 25 mm are cut to a depth reaching the surface of aluminum base. While fixing the frying pan, a commercially available metal scrubbing brush (made of 18-8 stainless steel wire, weight: 50 g) is placed on the surface of the frying pan having the cut lines and reciprocated with applying a load of 1 kg evenly in a direction perpendicular to the direction of the lines at a rate of 70 times/min. with such amplitude that the center of the brush crosses at least 3 cut lines (namely amplitude of at least 50 mm). Simultaneously, the brush is rotated at 70 rpm, and the frying pan is heated at about 200 to 220°C. After the brush is reciprocated for up to 10,000 times under such conditions, peeling of the coating is observed. However, when the coating is peeled off between two cut lines and the aluminum base is continuously exposed between the lines before 10,000 time reciprocation, the test is stopped.

### Cooking test

On the coated frying pan, two loaves of chinese noodle, sliced vegetables, meet and seasonings are fried for 17 minutes on the average on gas flames with medium strength while mixing them with a wooden knife to prevent scorching. The cooking of the noodle is repeated, and sticking of the noodle to the surface of the frying pan is observed. The number of cooking cycles till the scorching which is not removed by the wooden knife or scorching mark remains is recorded.

### Example 2

A coating composition (2380 parts) prepared in Example 1 was charged in a mixer. Mica powder (average particle size: 35 µm) (200 parts) and aqueous carbon black paste (concentration: 24.4 %) (8 parts) were added in this order with stirring. Then the mixture was stirred for 20 minutes to prepare an aqueous modified PTFE coating composition.

The coating film formed from this composition was subjected to the same tests as in Example 1. Results are shown in Table.

### Example 3

A modified PTFE coating composition was obtained in the same manner as in Example 1 except that perfluoropropyl vinyl ether was not added at the beginning of the reaction. The coating film formed from this composition was subjected to the same tests as in Example 1. Results are shown in Table.

### Comparative Example 1

In a reaction vessel equipped with a propeller blade stirring apparatus, a 60 % aqueous dispersion of non-modified PTFE (molecular weight: 3,000,000) (8000 parts) was charged. Then, an aqueous sodium lauryl sulfate solution (concentration: 25 %) (195 parts), an aqueous polyoxyethylene nonionic surfactant solution (concentration: 25 %) (1840 parts), toluene (152 parts) and pure water (1255 parts) were added in this order with stirring. The mixture was stirred for about 20 minutes to prepare an aqueous coating composition.

The resultant composition had a solid content of 42 %, pH of 9.5 and a viscosity of 120 cp (at 25°C).

The coating film formed from this composition was subjected to the above tests. Results are shown in Table.

### Comparative Example 2

The same procedure as in Example 2 was repeated except that a composition prepared in Comparative Example 1 was used instead of a composition prepared in Example 1. Results are shown in Table.

### Comparative Example 3

The same procedure as in Comparative Example 1 was repeated except that non-modified PTFE having a molecular weight of 6,000,000 was used instead of non-modified PTFE having a molecular weight of 3,000,000. Results are shown in Table.

### Comparative Example 4

The same procedure as in Example 2 was repeated except that a composition prepared in Comparative Example 3 was used instead of a composition prepared in Example 1. Results are shown in Table.

**Table**

| Example No. | Wear resistance test (No. of reciprocation) | Cooking test (No. of cooking) |
|---|---|---|
| 1 | 9,200 | 1,000 |
| 2 | >10,000 | 1,300 |
| 3 | 8,000 | 880 |
| Com.1 | 2,100 | 230 |
| Com.2 | 3,300 | 350 |
| Com.3 | 6,000 | 500 |
| Com.4 | 7,500 | 700 |

## Claims

1. A modified polytetrafluoroethylene coating composition comprising a dispersion of modified polytetrafluoroethylene particles each of which consists of a core part and a shell part in a liquid medium, wherein the shell part contains 0.04 to 0.25 % by weight of chlorotrifluoroethylene based on the weight of the whole particle on the average, and the weight of the shell part is not larger than 50 % based on the weight of the whole particle on the average.

2. The composition according to claim 1, wherein the shell part contains 0.04 to 0.20 % by weight of chlorotrifluoroethylene based on the weight of the whole particle.

3. The composition according to claim 1, wherein the core part is made of pure polytetrafluoroethylene.

4. The composition according to claim 1, wherein the core part is made of polytetrafluoroethylene modified with a fluoroalkyl vinyl ether.

5. The composition according to claim 4, wherein the amount of the fluoroalkyl vinyl ether contained in the core part is 0.01 to 0.15 % by weight based on the weight of the whole particle.

6. The composition according to claim 4, wherein the fluoroalkyl vinyl ether is selected from the group consisting of an ether of the formula:
X(CF₂)ₙOCF=CF₂
wherein X is a hydrogen, fluorine or chlorine atom, n is a number of 1 to 6, and an ether of the formula:
C₃F₇(OCF₂CF₂CF₂)ₘ[OCF(CF₃)CF₂]ₜOCF=CF₂
wherein m is a number of 0 to 2, and t is a number of 0 to 2.

7. The composition according to claim 1, wherein the weight ratio of the core part to the shell part is from 50:50 to 98:2.

8. The composition according to claim 1, which further contains a solid film-modifier.

9. The composition according to claim 8, wherein the solid film-modifier is an electrically conductive substance.

10. A cooking utensil a surface of which is coated by a film obtainable from a modified polytetrafluoroethylene coating composition comprising a dispersion of modified polytetrafluoroethylene particles each of which consists of a core part and a shell part in a liquid medium, wherein the shell pare contains 0.04 to 0.25 % by weight of chlorotrifluoroethylene based on the weight of the whole particle on the average, and the weight of the shell part is not larger than 50 % based on the weight of the whole particle on the average.

11. A fixing heater roller comprising a roller base member and a covering film obtainable from a modified polytetrafluoroethylene coating composition comprising a dispersion of modified polytetrafluoroethylene particles each of which consists of a core part and a shell part in a liquid medium, wherein the shell part contains 0.04 to 0.25 % by weight of chlorotrifluoroethylene based on the weight of the whole particle on the average, and the weight of the shell part is not larger than 50 % based on the weight of the whole particle on the average.

## Patentansprüche

1. Modifizierte Polytetrafluorethylen-Überzugszusammensetzung, enthaltend eine Dispersion modifizierter Polytetrafluorethylenteilchen, von denen ein jedes aus einem Kernteil und einem Mantelteil besteht, in einem flüssigen Medium, worin der Mantelteil 0,04 bis 0,25 Gew.% Chlortrifluorethylen, bezogen auf das mittlere Gesamtgewicht des Teilchens, enthält, und das Gewicht des Mantelteils nicht größer als 50 % bezogen auf das mittlere Gesamtgewicht des Teilchens ist.

2. Zusammensetzung nach Anspruch 1, worin der Mantelteil 0,04 bis 0,20 Gew.% Chlortrifluorethylen bezogen auf das Gewicht des Teilchens enthält.

3. Zusammensetzung nach Anspruch 1, worin der Kernteil aus reinem Polytetrafluorethylen hergestellt ist.

4. Zusammensetzung nach Anspruch 1, worin der Kernteil aus einem mit einem Fluoralkylvinylether modifizierten Tetrafluorethylen hergestellt ist.

5. Zusammensetzung nach Anspruch 4, worin die Menge des in dem Kernteil enthaltenen Fluoralkylvinylethers 0,01 bis 0,15 Gew.%, bezogen auf das Gesamtgewicht des Teilchens, ist.

6. Zusammensetzung nach Anspruch 4, worin der Fluoralkylvinylether ausgewählt ist aus einem Ether der Formel:
X(CH₂)ₙOCF=CF₂
worin X ein Wasserstoff-, Fluor- oder Chloratom ist, n ist eine ganze Zahl von 1 bis 6, und einem Ether der Formel:
C₃F₇(OCF₂CF₂CF₂)ₘ[OCF(CF₃)CF₂]ₜOCF=CF₂
worin m eine Zahl von 0 bis 2 und t eine Zahl von 0 bis 2 ist.

7. Zusammensetzung nach Anspruch 1, worin das Gewichtsverhältnis des Kernteils zum Mantelteil 50:50 zu 98:2 ist.

8. Zusammensetzung nach Anspruch 1, welche zusätzlich ein festes Film-Modifizierungsmittel enthält.

9. Zusammensetzung nach Anspruch 8, worin das feste Film-Modifizierungsmittel eine elektrisch leitfähige Substanz ist.

10. Kochgerät mit einer Oberfläche, welche mit einem Film erhältlich aus einer modifizierten Polytetrafluorethylen-Überzugszusammensetzung beschichtet ist, die eine Dispersion modifizierter Polytetrafluorethylenteilchen enthält, von denen ein jedes aus einem Kernteil und einem Mantelteil besteht, in einem flüssigen Medium, worin der Mantelteil 0,04 bis 0,25 Gew.% Chlortrifluorethylen, bezogen auf das mittlere Gesamtteilchengewicht enthält, und das Gewicht des Mantelteils nicht größer als 50 %, bezogen auf das Gewicht des mittleren Gesamtteilchens, ist.

11. Fixierheißrolle, umfassend ein Rollenbasisglied und einen Überzugsfilm, erhältlich aus einer Polytetrafluorethylen-Überzugszusammensetzung, umfassend eine Dispersion aus modifizierten Polytetrafluorethylenteilchen, von denen jedes aus einem Kernteil und einem Mantelteil besteht, in einem flüssigen Medium, worin der Mantelteil 0,04 bis 0,25 Gew.% Chlortrifluorethylen bezogen auf das mittlere Gesamtteilchengewicht enthält, und das Gewicht des Mantelteils nicht größer als 50 % bezogen auf das mittlere Gesamtgewicht des Teilchens ist.

## Revendications

1. Composition de revêtement de polytétrafluoroéthylène modifié comprenant une dispersion dans un milieu liquide de particules de polytétrafluoroéthylène modifié dont chacune est constituée d'une partie centrale et d'une partie périphérique, dans laquelle la partie périphérique contient en moyenne entre 0,04 et 0,25 % en masse de chlorotrifluoroéthylène par rapport à toute la masse de la particule et dans laquelle la masse de la partie périphérique est en moyenne inférieure ou égale à 50 % par rapport à toute la masse de la particule.

2. Composition selon la revendication 1, dans laquelle la partie périphérique contient entre 0,04 et 0,20 % en masse de chlorotrifluoroéthylène par rapport à toute la masse de la particule.

3. Composition selon la revendication 1, dans laquelle la partie centrale est en polytétrafluoroéthylène pur.

4. Composition selon la revendication 1, dans laquelle la partie centrale est en polytétrafluoroéthylène modifié par un éther vinylique de fluoroalkyle.

5. Composition selon la revendication 4, dans laquelle la quantité d'éther vinylique de fluoroalkyle contenue dans la partie centrale est comprise entre 0,01 et 0,15 % en masse par rapport à toute la masse de la particule.

6. Composition selon la revendication 4, dans laquelle on choisit l'éther vinylique de fluoroalkyle dans le groupe constitué par un éther de formule :
X(CF₂)ₙOCF=CF₂
dans laquelle X représente un atome d'hydrogène, un atome de fluor ou un atome de chlore, n est un nombre valant entre 1 et 6,
et un éther de formule :
C₃F₇(OCF₂CF₂CF₂)ₘ[OCF(CF₃)CF₂]ₜOCF=CF₂,
dans laquelle m est un nombre valant entre 0 et 2 et t est un nombre valant entre 0 et 2.

7. Composition selon la revendication 1, dans laquelle le rapport massique de la partie centrale à la partie périphérique est compris entre 50:50 et 98:2.

8. Composition selon la revendication 1, qui contient de plus un agent de modification de film solide.

9. Composition selon la revendication 8, dans laquelle l'agent de modification de film solide est une substance conductrice d'électricité.

10. Ustensile de cuisine dont une surface est revêtue d'un film qu'on peut obtenir à partir d'une composition de revêtement de polytétrafluoroéthylène modifié comprenant une dispersion dans un milieu liquide de particules de polytétrafluoroéthylène modifié dont chacune est constituée d'une partie centrale et d'une partie périphérique, dans laquelle la partie périphérique contient en moyenne entre 0,04 et 0,25 % en masse de chlorotrifluoroéthylène par rapport à toute la masse de la particule et dans laquelle la masse de la partie périphérique est en moyenne inférieure ou égale à 50 % par rapport à toute la masse de la particule.

11. Rouleau de fixation par chauffage comprenant un élément de base de rouleau et un film de revêtement qu'on peut obtenir à partir d'une composition de revêtement de polytétrafluoroéthylène modifié comprenant une dispersion dans un milieu liquide de particules de polytétrafluoroéthylène modifié dont chacune est constituée d'une partie centrale et d'une partie périphérique, dans laquelle la partie périphérique contient en moyenne entre 0,04 et 0,25 % en masse de chlorotrifluoroéthylène par rapport à toute la masse de la particule et dans laquelle la masse de la partie périphérique est en moyenne inférieure ou égale à 50 % par rapport à toute la masse de la particule.
